# EUROPÄISCHE PATENTSCHRIFT

(11) **EP 1 459 935 B1**
(45) Veröffentlichungstag und Bekanntmachung des Hinweises auf die Patenterteilung: **17.09.2008**
(21) Anmeldenummer: 04004918.1
(22) Anmeldetag: 03.03.2004
(51) Int. Cl.: B60Q 1/14, B60Q 1/06, B60Q 1/12, F21V 14/00

(54) **Betätigungseinrichtung für einen Scheinwerfer eines Kraftfahrzeuges**
Acuating device for the headlamp of a automotive vehicle
Dispositif d'actionnement pour un phare d'un véhicule automobile

(30) Priorität: 13.03.2003 DE 10311008
(43) Veröffentlichungstag der Anmeldung: 22.09.2004
(73) Patentinhaber: ADAM OPEL AG, 65423 Rüsselsheim (DE)
(72) Erfinder: Girschick, Robert, 64823 Gross-Umstadt (DE); Wern, Eric, 64289 Darmstadt (DE)

(56) Entgegenhaltungen:
- EP-A- 0 723 108
- EP-A- 0 900 972
- DE-A- 10 044 391
- DE-A- 19 852 306

## Beschreibung

Die Erfindung bezieht sich auf eine Betätigungseinrichtung für einen Scheinwerfer eines Kraftfahrzeuges, der für eine Verkehrsart, nämlich Rechtsverkehr oder Linksverkehr, ausgelegt ist, und der ein asymmetrisches Abblendlichtbündel ausstrahlt, das auf der eigenen Verkehrsseite eine größere Reichweite als auf der Gegenverkehrsseite aufweist, wobei ein Scheinwerferbauteil mittels von einem Steuergerät beaufschlagter Stellelemente zur vertikalen Leuchtweitenregulierung sowie zur horizontalen Kurvenlichtregulierung vorgesehen ist.

Aus der Praxis sind Betätigungseinrichtungen für Scheinwerfer von Kraftfahrzeugen, die auch als "Advanced Forward Lamp (AFL)" System bezeichnet werden, bekannt. Mit einem solchen AFL-System können die Scheinwerfer sowohl statisch höhenreguliert wie auch bei Kurvenfahrt dynamisch in Fahrtrichtung ausgerichtet werden, so dass eine optimale Ausleuchtung des Fahrweges gewährleistet ist. Gleichzeitig ist es möglich, die Scheinwerfer mechanisch in einen so genannten Touristenmodus umzuschalten. Mit der Touristenfunktion wird die Hell-Dunkel-Grenze im Scheinwerfer symmetrisch eingestellt, um Linkslenkerfahrzeuge in Ländern mit Rechtsverkehr bzw. Rechtslenkerfahrzeuge in Ländern mit Linksverkehr betreiben zu dürfen. Dies war bislang nur durch aufwendiges Abkleben der Scheinwerferverglasung so möglich, dass keine Blendung des Gegenverkehrs auftrat.

Problematisch ist allerdings bei dem AFL-System, dass auf Grund der hohen Packungsdichte im Kraftfahrzeug oftmals auf - grundsätzlich erwünschte - Funktionalität einzelner Komponenten verzichtet werden muss, um vorgegebene Bauraumgrenzen einzuhalten. Unter diesem Gesichtspunkt wird bislang auch auf die Realisierung der Touristenfunktion zugunsten anderer Funktionalität verzichtet. Eine elektronische Ansteuerung der Scheinwerfer scheiterte bislang an der Notwendigkeit entsprechender Bedienelemente im Cockpit, wo aus Platzgründen wiederum auf andere Bedienelemente verzichtet werden müsste. Eine akzeptable Integration der Touristenfunktion in bestehende Fahrzeugkonzepte wurde deshalb bis heute nicht gefunden, womit es im Regelfall beim "Abkleben" der Scheinwerferverglasung mit z.B. entsprechend aufwendig zugeschnittener, lichtundurchlässiger Kunststoffolie blieb.

Im Weiteren zeigt die EP 0 723 108 A1 einen Scheinwerfer für ein Kraftfahrzeug mit einer Gasentladungslampe als Leuchtmittel und einem Reflektor, der einen oberen und einen unteren Reflektorbereich aufweist, wobei von der Gasentladungslampe ausgestrahltes Licht vom oberen Reflektorbereich als konvergentes Lichtbündel reflektiert wird und ein Abblendlichtbündel bildet. Das vom oberen Reflektorbereich und vom unteren Reflektorbereich reflektierte Licht bildet zusammen ein Fernlichtbündel. Im Weiteren ist eine in Lichtaustrittsrichtung nach dem Reflektor angeordnete Linse vorgesehen, durch die zumindest das vom oberen Reflektor reflektierte Licht hindurchtritt. Zwischen dem Reflektor und der Linse ist eine Blendenanordnung angeordnet, von der zumindest ein Blendenteil zwischen einer Stellung für Abblendlicht, in der dieses Blendenteil vom unteren Reflektorbereich reflektiertes Licht abschirmt, und einer Stellung für Fernlicht, in der vom unteren Reflektorbereich reflektiertes Licht an diesem Blendenteil vorbeigelangen und aus dem Scheinwerfer austreten kann. In der Stellung für Abblendlicht wird durch eine Kante des verstellbaren Blendenteils eine Hell-Dunkel-Grenze des Abblendlichtbündels erzeugt. Die Kante des Blendenteils weist zwei in horizontaler Richtung nebeneinander angeordnete Kantenabschnitte auf, wobei durch den einen Kantenabschnitt die Hell-Dunkel-Grenze auf der eigenen Verkehrsseite erzeugt wird und durch den anderen Kantenabschnitt die Hell-Dunkel-Grenze auf der Gegenverkehrsseite erzeugt wird. Die beiden Kantenabschnitte sind in vertikaler Richtung versetzt zueinander angeordnet und das Blendenteil ist zwischen einer Stellung für Rechtsverkehr und einer Stellung für Linksverkehr verstellbar. In beiden Stellungen des Blendenteils ist jeweils der die Hell-Dunkel-Grenze auf der eigenen Verkehrsseite erzeugende Kantenabschnitt in vertikaler Richtung tiefer angeordnet als der die Hell-Dunkel-Grenze auf der Gegenverkehrsseite erzeugende Kantenabschnitt. Zur Verstellung des Blendenteils ist ein Stellelement vorgesehen, das elektromotorisch, hydraulisch oder pneumatisch wirksam sein kann und das durch eine Steuereinrichtung betätigt wird. Die Steuereinrichtung ist mit einem Lichtschalter des Kraftfahrzeuges verbunden.

Es ist Aufgabe der Erfindung, eine Betätigungseinrichtung der eingangs genannten Art derart weiterzubilden, dass eine ergonomische Bedienbarkeit und raumsparende Anordnung gewährleistet sowie konstruktiv einfach und kostengünstig umsetzbar ist.

Die Aufgabe wird erfindungsgemäß dadurch gelöst, dass das Steuergerät mit üblicherweise vorhandenen elektrischen Bedienelementen des Kraftfahrzeuges verbunden ist, deren aufeinander abgestimmte Betätigung dem Steuergerät signalisiert, einen Wechsel in die jeweils andere Verkehrsart durch Verschwenken des Scheinwerferbauteils derart zu bewirken, dass die Reichweite des Abblendlichtbündels keine Blendung des Gegenverkehrs verursacht.

Ein wesentlicher Vorteil ist, dass zum Einstellen der Scheinwerfer in die jeweils andere Verkehrsart (im Folgenden auch Touristenmodus) kein weiterer Platz im Cockpit benötigt wird. Es genügt die Einbeziehung von üblicherweise im Kraftfahrzeug schon vorhandener Bedienelemente, deren Funktionsumfang genutzt wird, um bei einer bestimmten, aufeinander abgestimmten Betätigung ein eindeutiges Signal zur Steuerung der Scheinwerfer in die jeweils andere Verkehrsart und zurück zu erhalten. Die auszuwertenden Signale können von allen - unter Beachtung ergonomischer und sicherheitstechnischer Gesichtspunkte - geeigneten elektrischen Bedienelementen des Kraftfahrzeuges ausgehen, und eine Signalkopplung von z.B. zeitlich definiert aufeinander folgenden oder gleichzeitig anliegenden Signalen umfassen.

Das AFL-System unterstützt dabei in der Basisversion die Lichtfunktionen "Dynamisches Kurvenlicht" und "Automatische Leuchtweitenregulierung" (ALWR). Beide Funktionen werden zum Umschalten in die jeweils andere Verkehrsart genutzt, indem die Scheinwerfer um die Breite der asymmetrischen Verschiebung nach unten bzw. um einen noch zu definierenden Betrag nach links (bei Rechtlenkerfahrzeugen rechts) verfahren werden.

Vorteilhafterweise liegen von den Bedienelementen übermittelte Aktivierungs-/Deaktivierungssignale für einen Wechsel in die jeweilige andere Verkehrsart gemeinsam an dem Steuergerät an. Dies dient insbesondere dem Erfordernis der Ergonomie, da eine solche Betätigung von Bedienelementen für den Nutzer leicht verständlich und bewusst sowie sicher durchzuführen ist. Eine definierte aufeinander folgende Betätigung von Bedienelementen ist zwar auch möglich, setzt dagegen aber schon voraus, dass dem Nutzer die vorgeschriebene Reihenfolge immer bewusst ist. Dies kann aber bei einer Funktionalität wie dem Verschwenken der Scheinwerfer in den Touristenmodus, welcher eher selten betätigt wird, nicht immer vorausgesetzt werden.

Bevorzugt liegt wenigstens ein Aktivierungs-/Deaktivierungssignal für einen Wechsel in die jeweils anderen Verkehrsart über eine definierte Zeitspanne hinweg an dem Steuergerät an. Die erfordert die bewusste Betätigung wenigstens eines Bedienelements durch den Nutzer über eine Zeitspanne hinweg, während der z.B. ein anderes Bedienelement zusätzlich betätigt werden muss, um ein Verschwenken der Scheinwerfer zu aktivieren bzw. zu deaktivieren. Ein unbewusstes Auslösen der Touristenfunktion ist somit ausgeschlossen, zumindest aber nur schwer möglich. Dadurch werden zusätzlich auch sicherheitstechnische Anforderungen erfüllt.

Vorzugsweise geht wenigstens ein Aktivierungs/Deaktivierungssignal für den Wechsel in die jeweils andere Verkehrsart und wieder zurück von einem Bedienelement mit Schaltfunktion, insbesondere von der Schaltfunktion "Zündung Ein", aus. Einerseits ist die Zündung ein Schalter, der üblicherweise nur bei Fahrtantritt und schließlich wieder bei Fahrtende, somit wenigstens zweimal je Fahrt vom Nutzer bewusst betätigt werden muss. Es steht damit immer ein definierter Schaltzustand bereit, dessen Signal initial anliegt und durch Zuschalten beliebiger weiterer Signale anderer Bedienelemente zu einem Aktivierungs-/Deaktivierungssignal für die Scheinwerfer gekoppelt werden kann. Andererseits entsteht der sicherheitstechnische Vorteil, dass der Touristenmodus nicht irrtümlich im Fahrtzustand ausgelöst werden kann.

Vorteilhafterweise geht wenigstens ein Aktivierungs-/Deaktivierungssignal für einen Wechsel in die jeweils andere Verkehrsart und wieder zurück von einem Bedienelement mit Tastenfunktion, insbesondere der Tastenfunktion "Lichthupe", aus. Einerseits ist der Lichthupentaster immer - auch bei ausgeschalteter Zündung - aktiv, andererseits bietet er sich insofern an, als sich unter zeitlichen Aspekten besonders gut abprüfen lässt, ob tatsächlich ein bewusster Wechsel in den Touristenmodus vom Nutzer gewünscht ist. Wird der Lichthupentaster, als Hebel üblicherweise links vom Lenkrad angebracht, über eine definierte Zeitspanne gezogen oder in eine Rastposition nach vorn gedrückt, kann sein Signal als bewusste Aktivierung/Deaktivierung für den Touristenmodus gewertet werden. Dies gilt insbesondere in Verbindung mit der Zündung im Zustand "Zündung Ein", also im Stand des Kraftfahrzeuges, in dem üblicherweise keine Lichthupenbetätigung vorgenommen wird.

Zweckmäßigerweise wird die Aktivierung der jeweils anderen Verkehrsart mit einem optischen und/oder akustischen Signal bestätigt. Sollte dennoch, z.B. bei Betätigung der Zündung und in Rastposition gedrücktem Lichthupentaster, der Touristenmodus irrtümlich ausgelöst werden, wird dies von dem Nutzer rechtzeitig wahrgenommen. Bei bewusster Betätigung des Verschwenkens der Scheinwerfer erhält der Nutzer eine Bestätigung z.B. über eine an der Instrumententafel angeordnete Warnlampe und/oder ein akustisches Signal.

Bevorzugt entfällt bei Deaktivierung der jeweils anderen Verkehrsart das optische und/oder akustische Signal. Dies vereinfacht sowohl die elektronische Realisierung der Betätigungseinrichtung, da eine Funktion entfällt. Gleichzeitig wird sichergestellt, dass der Nutzer zwischen Deaktivierung (keine optische und/oder akustische Information) und Aktivierung (optische und/oder akustische Information) unterscheiden kann und zusätzlich nicht durch unnötige Informationen verwirrt wird.

Nach einer vorteilhaften Ausgestaltung der Erfindung wird, solange die jeweils andere Verkehrsart aktiviert ist, mit jedem neuen Zündzyklus ein optisches Signal über eine vorbestimmte Zeitdauer angezeigt. Dies bietet dem Nutzer einen leichten Überblick über den Konfigurations- und Betriebszustand von Funktionskomponenten in einer Art, wie er dies von der Prüfung z.B. der Motorkomponenten (Zündung, Ölstand), der Elektrik (Batterie) oder der Sicherheitskomponenten (Airbag) beim Starten schon gewohnt ist. Der Nutzer hat damit regelmäßig die Möglichkeit zu überprüfen, ob eine Aktivierung des Touristenmodus überhaupt noch notwendig ist.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispiels unter Bezugnahme auf die zugehörigen Zeichnungen näher erläutert. Gleiche oder gleichwirkende Teile sind mit gleichen Bezugsziffern versehen. Es zeigen:
- Fig. 1: eine schematische Darstellung einer erfindungsgemäßen Betätigungseinrichtung eines Scheinwerfers und
- Fig. 2: den zeitlichen Ablauf einzelner Signale von Zündung, AFL und Lichthupentaster zum Aktivieren bzw. Deaktivieren des Touristenmodus der Betätigungseinrichtung nach Fig. 1.

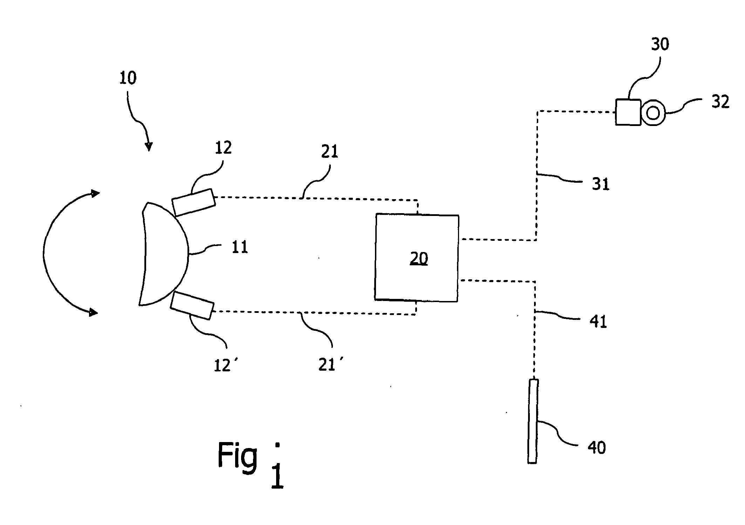

Die Fig. 1 zeigt eine schematische Darstellung einer Betätigungseinrichtung eines Scheinwerfers 10. Ein Scheinwerferbauteil 11 kann dabei zum Einstellen eines davon ausgehenden Lichtbündels von Stellelementen 12, 12' sowohl in der Bildebene (in der Vertikalen, angedeutet durch den halbkreisförmigen Doppelpfeil) oder senkrecht zur Bildebene (in der Horizontalen, nicht bezeichnet) verschwenkt werden. Die Stellelemente 12, 12' sind mit einem Steuergerät 20 über elektrische Verbindungen 21, 21' gekoppelt, über die eine gewünschte Positionierung vom Steuergerät 20 signalisiert wird. Eine Zündung 30 und ein Lichthupentaster 40 sind zur Betätigung des Steuergeräts 20 mit dieser über elektrische Verbindungen 31 und 41 verbunden. Die elektrischen Verbindungen 21, 21', 31 und 41 können elektrische Leitungen oder auch ein KFZ-Bussystem (z.B. CAN) umfassen.

Der Scheinwerfer 10 soll nun in den Touristenmodus verschwenkt werden, bei einem Linkslenkerfahrzeug also vertikal um die Breite der asymmetrischen Verschiebung des Lichtbündels nach unten und um einen horizontalen Betrag nach rechts. Dazu wird vom Nutzer der Lichthupentaster 40 gezogen und ein Zündschlüssel (32) in der Zündung (30) auf "Zündung Ein" gedreht. Liegen beide Signale über eine definierte Zeitspanne an dem Steuergerät 20 an, wird der Touristenmodus aktiviert und die Scheinwerfer werden verschwenkt. Die Aktivierung wird dem Nutzer mit einem akustischen und/oder optischen Signal bestätigt, welches von dem Steuergerät 20 über z.B. den KFZ-Bus initiiert wird. Ein gleiches Vorgehen deaktiviert den Touristenmodus, wobei dann das akustische und/oder optische Signal entfällt.

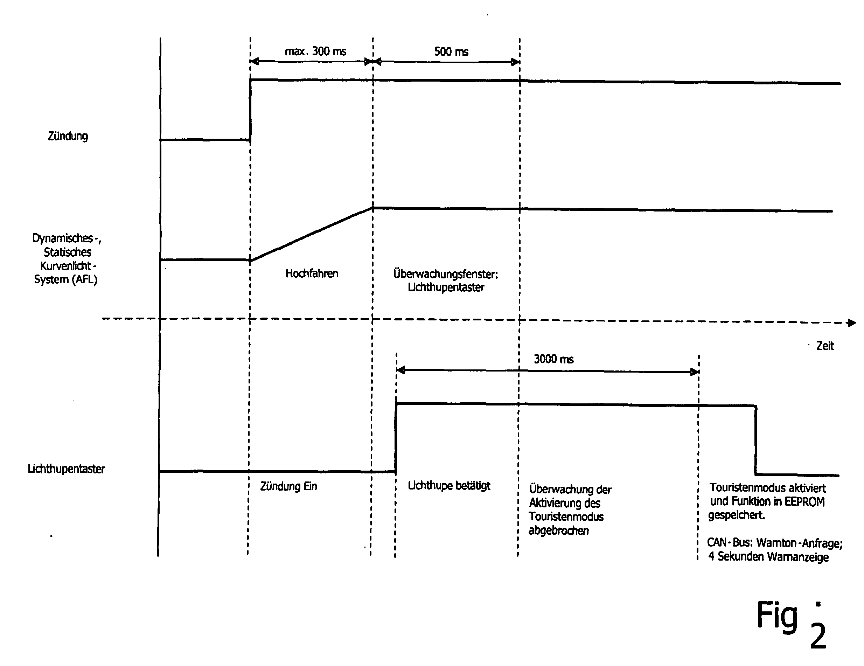

Die Fig. 2 stellt den zeitlichen Ablauf einzelner Signale von Zündung 30, Steuergerät 20 (Statischesund Dynamisches Kurvenlicht AFL) und Lichthupentaster 40 zum Aktivieren bzw. Deaktivieren des Touristenmodus der Betätigungseinrichtung nach Fig. 1 dar. Es wird dabei folgende Ein- bzw. Ausschaltsequenz definiert. Zunächst befindet sich das Kraftfahrzeug im Zustand "Zündung Aus" und im Stand. Der Lichthuperntaster 40 wird gezogen und anschließend die Zündung 30 eingeschaltet, wobei kein Motorstart stattfindet. Der Lichthupentaster 40 muss so lange gehalten werden (ca. 3 sec), bis eine akustische Bestätigung für die Aktivierung bzw. Deaktivierung des Touristenmodus gesendet wird. Gleichzeitig wird eine AFL-Warnlampe an einer Instrumententafel (beides nicht gezeigt) 4 sec angesteuert. Beim Ausschalten des Touristenmodus entfällt die optische Bestätigung. Solange der Modus aktiv ist, wird dem Nutzer in jedem Zündzyklus 4 sec die optische Bestätigung an der Instrumententafel gezeigt.

Der Signalverlauf zeigt nun eine konkrete Umsetzung der Touristenfunktion im Steuergerät 20. Das Signal "Lichthupe" wird über einen seriellen KFZ-BUS (CAN) an das Steuergerät 20 übermittelt. Da das Steuergerät 20 direkt mit der Zündung 30 aktiviert wird, beginnt erst nach einer Phase des Hochfahrens (Power Up) die Überwachung des Lichthupentasters 40. Das Überwachungsfenster zur Abfrage des Lichthupentasters 40 ist insgesamt 500 ms breit. Wird in dieser Überwachungsphase kein aktiver Lichthupentaster 40 detektiert, bleibt der Touristenmodus deaktiviert bzw. aktiviert. Wird innerhalb der Überwachungszeit ein aktiver Lichthupentaster 40 detektiert, überprüft das System, ob das Signal für 3 sec ansteht. Ist das der Fall, wird der Touristenmodus aktiviert bzw. deaktiviert und der neue Zustand in einem nichtflüchtigen Speicher (nicht dargestellt) abgelegt. Das Steuergerät 20 sendet eine Anfrage für eine akustische Bestätigung (Sound Request) bzw. zusätzlich eine Warnlampenansteuerung bei Aktivierung des Touristenmodus an die zuständigen Steuerungen (Central Information Management; CIM, Instrumententafel). Steht das Tastensignal kürzer als 3 sec an, wird die Funktionsüberwachung abgebrochen. Es kommt dann zu keiner Aktivierung bzw. Deaktivierung des Touristenmodus.

### Bezugszeichenliste

- 10: Scheinwerfer
- 11: Scheinwerferbauteil
- 12, 12': Stellelement
- 20: Steuergerät
- 21, 21': Elektrische Verbindung
- 30: Zündung
- 31: Elektrische Verbindung
- 32: Zündschlüssel
- 41: Elektrische Verbindung
- 40: Lichthupentaster

## Patentansprüche

1. Betätigungseinrichtung für einen Scheinwerfer eines Kraftfahrzeuges, der für eine Verkehrsart, nämlich Rechtsverkehr oder Linksverkehr, ausgelegt ist, und der ein asymmetrisches Abblendlichtbündel ausstrahlt, das auf der eigenen Verkehrsseite eine größere Reichweite als auf der Gegenverkehrsseite aufweist, wobei ein Scheinwerferbauteil (11) mittels von einem Steuergerät (20) beaufschlagter Stellelemente (12, 12') zur vertikalen Leuchtweitenregulierung sowie zur horizontalen Kurvenlichtregulierung vorgesehen ist, **dadurch gekennzeichnet, dass** das Steuergerät (20) mit üblicherweise vorhandenen elektrischen Bedienelementen (30, 40) des Kraftfahrzeuges verbunden ist, deren aufeinander abgestimmte Betätigung dem Steuergerät (20) signalisiert, einen Wechsel in die jeweils andere Verkehrsart durch Verschwenken des Scheinwerferbauteils (11) derart zu bewirken, dass die Reichweite des Abblendlichtbündels keine Blendung des Gegenverkehrs verursacht.

2. Betätigungseinrichtung nach Anspruch 1, **dadurch gekennzeichnet, dass** von den Bedienelementen (30, 40) übermittelte Aktivierungs-/Deaktivierungssignale für einen Wechsel in die jeweils andere Verkehrsart gemeinsam an dem Steuergerät (20) anliegen.

3. Betätigungseinrichtung nach Anspruch 1 oder 2, **dadurch gekennzeichnet, dass** wenigstens ein Aktivierungs-/Deaktivierungssignal für einen Wechsel in die jeweils anderen Verkehrsart über eine definierten Zeitspanne hinweg an dem Steuergerät (20) anliegt.

4. Betätigungseinrichtung nach einem der Ansprüche 1 bis 3, **dadurch gekennzeichnet, dass** wenigstens ein Aktivierungs-/Deaktivierungssignal für den Wechsel in die jeweils andere Verkehrsart und wieder zurück von einem Bedienelement (30) mit Schaltfunktion, insbesondere von der Schaltfunktion "Zündung Ein", ausgeht.

5. Betätigungseinrichtung nach einem der Ansprüche 1 bis 4, **dadurch gekennzeichnet, dass** wenigstens ein Aktivierungs-/Deaktivierungssignal für einen Wechsel in die jeweils andere Verkehrsart und wieder zurück von einem Bedienelement (40) mit Tastenfunktion, insbesondere der Tastenfunktion "Lichthupe", ausgeht.

6. Betätigungseinrichtung nach einem der Ansprüche 1 bis 5, **dadurch gekennzeichnet, dass** die Aktivierung der jeweils anderen Verkehrsart mit einem optischen und/oder akustischen Signal bestätigt wird.

7. Betätigungseinrichtung nach Anspruch 6, **dadurch gekennzeichnet, dass** bei Deaktivierung der jeweils anderen Verkehrsart das optische und/oder akustische Signal entfällt.

8. Betätigungseinrichtung nach einem der Ansprüche 1 bis 7, **dadurch gekennzeichnet, dass** solange die jeweils andere Verkehrsart aktiviert ist, mit jedem neuen Zündzyklus ein optisches Signal über eine vorbestimmte Zeitdauer angezeigt wird.

## Claims

1. Actuation equipment for a headlight of a motor vehicle designed for one traffic type, the right-hand traffic or the left-hand traffic, and eradiating an asymmetric dim light bundle, having a greater operating distance on its own traffic direction than on the opposite traffic direction wherein there is one component of the headlight (11) to regulate the vertical range of illumination and the horizontal range of the illumination in the turns by means of a aligner control unit (20) of charged adjustment mechanisms (12, 12'), **characterized in that** the aligner control unit (20) is connected to the commonly used electrical operating devices (30, 40) of the motor vehicle, whose subsequent actuation signalizes to the aligner control unit (20) the change into the opposite traffic type by oscillating the component of the headlight (11) so that the operating distance of the dim light bundle does not cause a dazzling of the oncoming traffic.

2. Actuation equipment according to claim 1, **characterized in that** the activation or deactivation signals transmitted by the operating devices (30, 40) fit together the aligner control unit (20) in order to execute the change into the other traffic type.

3. Actuation equipment according to claim 1 or 2, **characterized in that** at least one activation or deactivation signal fits the aligner control unit (20) in order to execute the change into the other traffic type within a determined period of time.

4. Actuation equipment according to one of the previous claims 1 to 3, **characterized in that** at least one activation or deactivation signal to execute the change into the other traffic type and back starts from an operating device (30) equipped with switching function, primarily starting from the switching function "ignition on".

5. Actuation equipment according to one of the previous claims 1 to 4, **characterized in that** at least on activation or deactivation signal to execute the change into the other traffic type and back starts from an operating device (40) equipped with push button function, primarily with the push button function of the "headlight flasher".

6. Actuation equipment according to one of the previous claims 1 to 5, **characterized in that** the activation of the opposite traffic type is confirmed by means of an optical and/or acoustical signal.

7. Actuation equipment according to claim 6, **characterized in that** in case of a deactivation of the opposite traffic type the optical and/or acoustical signal stops.

8. Actuation equipment according to one of the previous claims from 1 to 7, **characterized in that** as long as the opposite traffic type is activated at every new ignition cycle an optical signal is shown for a predetermined period of time.

## Revendications

1. Dispositif d'actionnement pour un projecteur de véhicule à moteur, qui est conçu pour un mode de transport, à savoir une conduite à droite ou gauche, et qui rayonne un fuseau lumineux de croisement, asymétrique, lequel présente une portée plus grande sur le côté sens conducteur que sur le côté de trafic en sens inverse, étant donné qu'un élément (11) de construction du projecteur est prévu, pour la correction verticale de l'angle de site, ainsi que la correction horizontale de la lumière de virage, par le biais d'éléments de réglage (12, 12') actionnés par un appareil de commande (20), **caractérisé en ce que** l'appareil de commande (20) est lié avec les éléments électriques de réglage (30, 40), habituellement présents, du véhicule à moteur, dont l'actionnement respectivement accordé, signalise à l'appareil de commande (20), de produire un changement respectif dans l'autre mode de transport, par pivotement de l'élément (11) de construction du projecteur , de telle manière à ce que la portée du faisceaux lumineux de croisement, ne provoque aucun éblouissement du trafic en sens inverse.

2. Dispositif d'actionnement selon revendication 1, **caractérisé en ce que** les signaux d'activation et de désactivation transmis par les éléments de réglage (30, 40), pour un changement respectif dans l'autre mode de transport, se connectent ensembles à l'appareil de commande (20).

3. Dispositif d'actionnement selon revendication 1 ou 2, **caractérisé en ce que** au moins un signal d'activation / de désactivation, pour un changement respectif dans l'autre mode de transport, est connecté pendant une période de temps définie à l'appareil de commande (20).

4. Dispositif d'actionnement selon l'une des revendications 1 à 3, **caractérisé en ce que** au moins un signal d'activation / de désactivation, pour le changement respectif dans l'autre mode de transport et à nouveau de retour, est émis à partir d'un élément de réglage (30) avec fonction logique, en particulier une fonction logique « allumage »

5. Dispositif d'actionnement selon l'une des revendications 1 à 4, **caractérisé en ce que** au moins un signal d'activation / de désactivation, pour un changement respectif dans l'autre mode de transport et à nouveau de retour, est émis à partir d'un élément de réglage (40) avec fonction touche, en particulier la fonction touche « avertisseur lumineux ».

6. Dispositif d'actionnement selon l'une des revendications 1 à 5, **caractérisé en ce que** l'activation de l'autre mode respectif de transport est actionnée par un signal optique et/ou acoustique.

7. Dispositif d'actionnement selon revendication 6, **caractérisé en ce que** en cas d'une désactivation de l'autre mode respectif de transport, il n'existe pas de signal optique et/ou acoustique.

8. Dispositif d'actionnement selon l'une des revendications 1 à 7, **caractérisé en ce que** tant que l'autre mode respectif de transport est activé, avec chaque cycle d'allumage nouveau, un signal optique est affiché, pendant une période de temps prédéterminée.
